# EUROPEAN PATENT APPLICATION

(11) **EP 1 289 324 A1**
(43) Date of publication of application: **05.03.2003**
(21) Application number: 01307064.4
(22) Date of filing: 20.08.2001
(51) Int. Cl.: H04Q 7/32

(54) **Software upgrade of telecommunications user terminal**

(71) Applicant: LUCENT TECHNOLOGIES INC., Murray Hill, New Jersey 07974-0636 (US)
(72) Inventor: Khatib, Mohammad, Shaw, Swindon SN5 5SP, Wilts (GB)
(74) Representative: Sarup, David Alexander

(57) **Abstract**

A method of providing a user terminal (UE) in a wireless telecommunications network with a software upgrade involves making a call connection between the user terminal (UE) and a base station (Node B) in which software is transmitted from the base station to the user terminal.

## Description

### Technical Field

The present invention relates to a method of providing a user terminal in a wireless telecommunications network with a software upgrade. The present invention also relates to a wireless telecommunications network, and a base station.

### Summary of the Invention

The present invention provides a method of providing a user terminal in a wireless telecommunications network with a software upgrade comprising making a call connection between the user terminal and a base station in which software is transmitted from the base station to the user terminal. UEs can thus be upgraded on-air.

This has significant advantages over known methods used in mobile telecommunications systems such as Global System for Mobiles (GSM) to introduce new features. In those known systems, it has been the practice to carry out separate upgrades for infrastructure, on the one hand, and a user terminal on the other hand. The known way to upgrade such user terminals is always by replacing it with a new one supporting the new feature or features. However, buying a new user terminal equipment is expensive and wasteful.

The present invention is particularly advantageous in third generation (3G) and higher mobile systems. In such systems, the user has access to voice, high speed data, video and other e-commerce applications by using a mobile user terminal (User Equipment UE). It is envisaged that in such systems, in particular in Universal Mobile Telecommunications System (UMTS) network where a user terminal is connected to the UMTS Terrestrial Radio Access Network (UTRAN), there will be a need for many software upgrades in order to introduce new features and resolve existing problems and software bugs. A UE can be upgraded for a nominal fee or even for free, and in a manner which is convenient, fast and reliable.

Preferably the user terminal sends a request for a service to the base station, the base station forwards the request to a control node which responds with an instruction to the base station to transmit the software, and the base station transmits the software to the user terminal upon instruction from the control node.

The method preferably further comprises the step of the user terminal activating the software received.

Preferably the network is a Universal Mobile Telecommunications System (UMTS) network.

The present invention also provides a wireless telecommunications network comprising a base station operative to communicate by radio with a plurality of user terminals, the base station comprising means to provide a designated user terminal with a software upgrade comprising means for making a call connection with the user terminal in which software is transmitted to the user terminal.

Preferably upon receiving a request from a user terminal for a service, the base station forwards the request to a control node which instructs the base station to transmit the software to the user terminal, the base station transmitting the software to the user terminal upon instruction from the control node. Preferably the control node is a mobile switching centre (MSC) or Serving GPRS Support Node (SGSN) or Gateway GPRS Support Node (GGSN).

Preferably transmission time of the software upgrade is recorded for the purpose of billing.

Preferably the network is a Universal Mobile Telecommunications System (UMTS) network.

The present invention also provides a base station of a wireless telecommunications network comprising means to provide a designated user terminal with a software upgrade comprising means for making a call connection with the designated user terminal in which software is transmitted to the user terminal.

The present invention also provides a user terminal of a wireless telecommunications network comprising means for making a call connection with a base station in which software is received and means to activate the software.

### Brief Description of the Drawings

A preferred embodiment of the present invention will now be described by way of example and with reference to the drawings, in which:

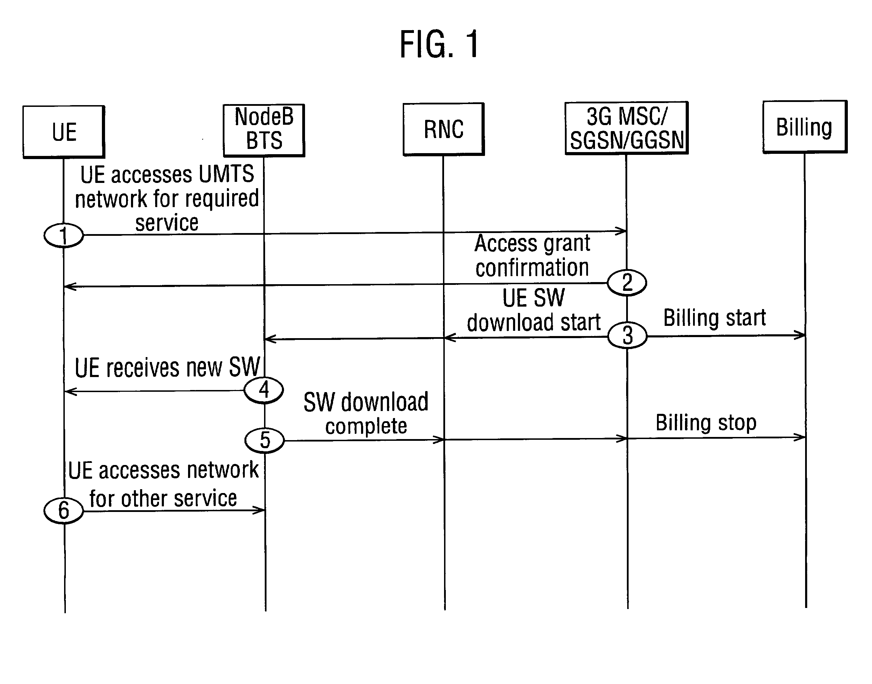

Figure 1 is a diagrammatic illustration of the message sequence of a User terminal software upgrade.

### Detailed Description

The UMTS network consists of base stations (Node B's) which communicate with UE's by radio. Each base station is under the control of a radio network controller RNC itself under the control of a third generation (3G) mobile switching centre MSC or Serving GPRS Support Node (SGSN) or Gateway GPRS Support Node (GGSN) (where GPRS is General Packet Radio Service).

As shown in Figure 1, each user equipment UE accesses the UMTS network and downloads the upgrade software, which is thereafter activated. The UE is thus upgraded with the latest software release. The sequence of message steps as shown in Figure 1 is as follows:
1.UE accesses the UMTS network to request the required service and passes on information regarding its manufacturer and type. In most cases, this information is already available in the network.
2. The request is processed by a third generation (3G) mobile switching centre MSC or Serving GPRS Support Node (SGSN) or Gateway GPRS Support Node (GGSN) (where GPRS is General Packet Radio Service) and access to the new software is granted thereby.
3.The radio network controller RNC and base station (NodeB) is instructed to download the specific software to the particular UE. Billing is started (if this service is to be charged by the network service provider).
4.The base station (NodeB) starts downloading the software to the UE.
5. On completion of the download, the base station (NodeB) informs other elements like RNC and Core Network. Billing is stopped (if it was started in the beginning).
6.The UE activates the new software. After activation, the UE is ready for accessing the network, for example, for the upgraded service enabled by the software upgrade.

## Claims

1. A method of providing a user terminal in a wireless telecommunications network with a software upgrade comprising making a call connection between the user terminal and a base station in which software is transmitted from the base station to the user terminal.

2. A method of providing a user terminal in a wireless telecommunications network with a software upgrade according to claim 1, in which the user terminal sends a request for a service to the base station, the base station forwards the request to a control node which responds with an instruction to the base station to transmit the software, and the base station transmits the software to the user terminal upon instruction from the control node.

3. A method of providing a user terminal in a wireless telecommunications network with a software upgrade according to claim 1 or claim 2, further comprising the steps of the user terminal activating the software received.

4. A method of providing a user terminal in a wireless telecommunications network with a software upgrade according to any preceding claim, in which the network is a Universal Mobile Telecommunications System (UMTS) network.

5. A wireless telecommunications network comprising a base station operative to communicate by radio with a plurality of user terminals, the base station comprising means to provide a designated user terminal with a software upgrade comprising means for making a call connection with the user terminal in which software is transmitted to the user terminal.

6. A wireless telecommunications network according to claim 5, in which upon receiving a request from a user terminal for a service, the base station forwards the request to a control node which instructs the base station to transmit the software to the user terminal, the base station transmitting the software to the user terminal upon instruction from the control node.

7. A wireless telecommunications network according to claim 6, in which the control node is a mobile switching centre (MSC) or Serving GPRS Support Node (SGSN) or Gateway GPRS Support Node (GGSN).

8. A wireless telecommunications network according to any of claims 5 to 7, in which the network is a Universal Mobile Telecommunications System (UMTS) network.

9. A base station of a wireless telecommunications network comprising means to provide a designated user terminal with a software upgrade comprising means for making a call connection with the designated user terminal in which software is transmitted to the user terminal.

10. A user terminal of a wireless telecommunications network comprising means for making a call connection with a base station in which software is received and means to activate the software.
